# EUROPEAN PATENT APPLICATION

(11) **EP 4 258 418 A1**
(43) Date of publication of application: **11.10.2023**
(21) Application number: 22212982.7
(22) Date of filing: 13.12.2022
(51) Int. Cl.: H01M 10/613, H01M 10/625, H01M 10/6555, H01M 10/6563, H01M 10/6566, H01M 10/6568, H01M 10/6557

(54) **BATTERY SYSTEM HAVING HEAT-DISSIPATION CIRCULATION STRUCTURE**

(30) Priority: 07.04.2022 TW 111113329
(71) Applicant: STL Technology Co., Ltd., Kaohsiung City 806011 (TW)
(72) Inventor: CHANG, Cooper, 806011 Kaohsiung City (TW)
(74) Representative: Viering, Jentschura & Partner mbB Patent- und Rechtsanwälte

(57) **Abstract**

This disclosure provides a battery system including a shell, a battery module, a fluid channel, and a plurality of tubes. The shell includes a fluid extraction port and a fluid extraction port. The battery module is disposed in the shell, and includes a battery fixed holder for accommodating a plurality of battery cells. The fluid channel is disposed above the battery fixed holder, and communicated with the fluid injection device. Each of the tubes is having an upper opening in the fluid channel, and having a side opening facing the battery cores. The fluid channel is communicated with a space where the battery cells are located via the tubes. A fluid is injected into the fluid channel via the fluid injection port, flows to the space where the battery cells are located via the tubes, and then is exhausted from the fluid extraction port.

## Description

This application claims priority on Taiwan Patent Application No. 111113329 filed April 07th, 2022, the entire contents of which are incorporated herein by reference.

### FIELD OF THE INVENTION April

The disclosure relates to a battery system, more particularly, a battery system having heat-dissipation circulation structure.

### BACKGROUND

In recent years, electric vehicles are gradually favored by people for reducing carbon of environmental protection. One after another, many automakers have entered into the development of electric vehicles to seize business opportunities in the electric vehicle market. Power source of electric vehicles is batteries, such as lithium batteries. For increasing longer driving range of the electric vehicle, a battery module with a considerable number of battery cells is usually installed on the electric vehicle to provide enough power for the electric vehicle in use.

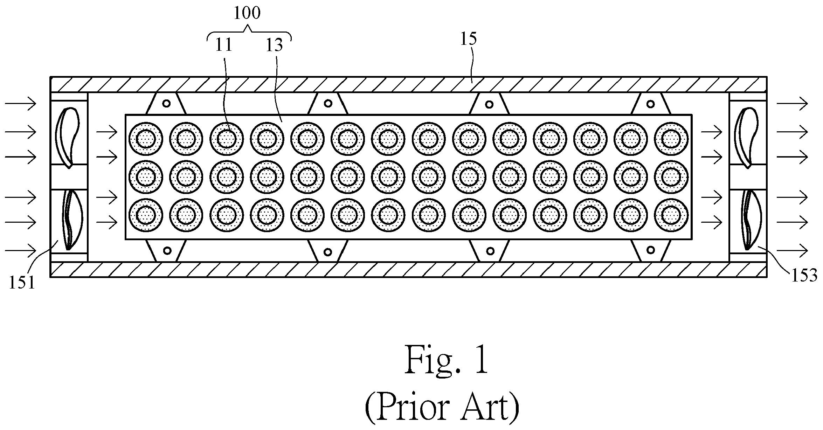

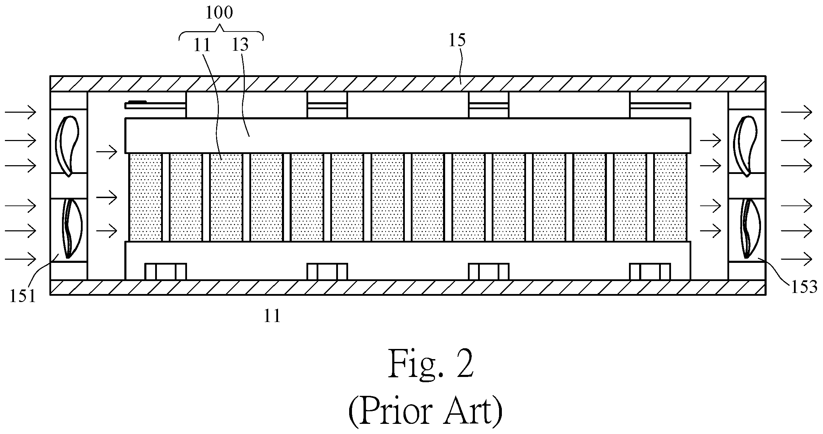

Referring to Fig. 1, Fig. 2, and Fig. 3, there are shown a top section view, a front section view, and a side section view of a conventional battery module disposed in a shell. As shown in Fig. 1 and Fig. 2, the battery module 100 can disposed in a shell 15 to protection the structure of the battery module 100. The battery module 100 comprises a plurality of battery cells 11 and a battery fixed holder 13 for accommodating and fixing the battery cells 11.

A heat will be generated when the battery cells 11 of the battery module 100 are charging or discharging. To dissipate the heat generated by of the battery cells 11 in charging or discharging, a blowing fan 151 is located at the front end of the shell 15, and an exhausting fan 153 is located at the rear end of the shell 15. The battery module 100 will be located between the blowing fan 151 and the exhausting fan 153. The blowing fan 151 blows an external cold air towards the positions where the battery cells 11 of the battery module 100 are located. The blown cold air will become a hot air after passing through the hot battery cells 11. Then, the exhausting fan 153 exhausts the hot air to the outside of the shell 15. Thus, the temperature of the battery cores 11 in charging or discharging can be lowered.

Gaps between the battery cells 11 disposed in the battery holder 13 are very small so that a high flow resistance is form, and a circulation efficiency of the cold air between the battery cells 11 is very poor. The blown cold air can only flow to places with low flow resistance. For example, these places with low flow resistance are near the blowing fan 151 or the periphery of the battery fixed holder 13. The battery cells 11 that are farther away from the fan 151 and located inside the battery fixed holder 13 will be not able to receive the blowing of cold air. Therefore, some battery cells 11 are often overheat during charging or discharging. The battery cells 11 overheated for a long time is easily worn out or increase a risk of explosion, which affects the life of the battery cells 11.

In the above-description heat dissipation way, the cold air is blown into the battery module 100 from the blowing fan 151, and exchanges heat with each passing batter cells 11. That is, the air received by the battery cells 11 located at the rear end of the shell 15 is an air that has completed to exchange heat with the battery cells 11 located at the front end of the shell 15. Therefore, the temperature of each of the battery cells 11 within the battery module 100 presents a higher and higher temperature gradient according to far and near from the blowing fan 151. Therefore, the aging speed of the battery cells 11 located at the rear end of the shell 15 is much faster than that of the battery cells 11 located at the front end of the shell 15.

Accordingly, the present disclosure provides an improved heat-dissipation circulation structure applied to a battery module. When the battery cells of the battery module are charging or discharging, the heat-dissipation circulation structure can evenly guide a cold fluid (air or liquid) from the outside of the battery module to each of positions where each of the battery cells within the battery module so that these battery cells heated in charging or discharging can be uniformly cooled down via directly contacting with the cold fluid at first hand.

### SUMMARY

The disclosure provides a battery system having a heat-dissipation circulation structure, which comprises a shell, a battery module, a fluid channel, and a plurality of tubes. The shell is provided on one side thereof with a fluid injection port, and provided on other side thereof with a fluid extraction port. The battery module is disposed in the shell, and located between the fluid injection port and the fluid extraction port. The battery module comprises a plurality of battery cells and a battery fixed holder for accommodating and fixing the battery cells. The fluid channel is a low flow resistance channel located around the battery fixed holder, and communicated with the fluid injection port. The tubes are vertically penetrated in the battery fixed holder, respectively. Each of the tubes is provided with an upper end extended to the fluid channel and including an upper opening, and provided with a lower end including at least one side opening facing the corresponding battery cells. The fluid channel is communicated with a space where the battery cells are located via the tubes. When the battery cells of the battery module executes to charge or discharge, a cold fluid is injected into the fluid channel via the fluid injection port of the fluid injection device. The cold fluid flows into the space where the battery cells in the battery fixed holder are located via the tubes protruding in the fluid channel. Then, the cold fluid blows or circulates towards the location of the battery cells so as to dissipate the heat generated on the battery cells during charging or discharging. The cold fluid becomes a hot fluid after absorbing the heat generated on the battery cells during charging or discharging. Finally, the hot fluid can be exhausted to the outside of the battery module from the fluid extraction port of the fluid extraction device so that the battery module can be dissipated.

In one embodiment of the disclosure, the fluid channel is communicated with the fluid injection port via a fluid guiding unit, which is a fluid guiding structure composed of a communicating pipe or a plurality of baffles, and is the only inlet for the cold fluid to be flowed into the fluid channel.

In one embodiment of the disclosure, the tubes are the only outlets for the cold fluid flowed in the fluid channel.

In one embodiment of the disclosure, the fluid channel is a mouth-shaped channel composed of an upper plate, a pair of side plates, and a lower plate; the fluid channel is provided with an opening end communicated with the fluid guiding unit, and provided with a closed end having a baffle plate; each of the tubes is passed through the lower plate, and provided with the upper end located in the fluid channel.

In one embodiment of the disclosure, the cold fluid is a cold air or a cooling liquid; when the cold fluid is injected into the fluid channel via the fluid injection port, the fluid channel will become a cold zone.

In one embodiment of the disclosure, when the battery cells are charging or discharging, a hot zone is formed in the space where the battery cells are located.

In one embodiment of the disclosure, the battery system further comprises a blower having an inlet port and an outlet port, and the fluid channel is provided with one end communicated with the outlet port of the blower; the blower inhales the cold fluid injected from the fluid injection port via the inlet port, and exhausts the cold fluid to the fluid channel via the outlet port.

In one embodiment of the disclosure, the fluid injection port is configured on a fluid injection device, and the fluid extraction port is configured on a fluid extraction device.

In one embodiment of the disclosure, the fluid injection device is a blowing fan or a fluid injection pump, and the fluid extraction device is an exhaust fan or a fluid extraction pump.

In one embodiment of the disclosure, the number of the plurality of tubes, the length of each of the plurality of tubes, the diameter of the upper opening of each of the plurality of tubes, and the number of the at least one side opening of each of the plurality of tubes will be adjusted according to a temperature of a space where each of the plurality of battery cells is charged or discharged.

Accordingly, by configuring the fluid channel and the tubes in the inside of the battery system, the cold fluid without heat-exchange in the fluid channel of the cold zone can be directly guided to the positions of the battery cells in the hot zone, so that each of the battery cells can directly contact with the cold fluid to achieve the effect of uniform heat-dissipation, and thereby the battery cells can avoid overheating during the charging or discharging to decrease the risk of the damage or explosion of the battery cells, and increase the safety of the battery system in use.

### BRIEF DESCRIPTION OF THE DRAWINGS

Fig. 1 is a top section view of a conventional battery module disposed in a shell.
Fig. 2 is a front section view of a conventional battery module disposed in a shell.
Fig. 3 is a side section view of a conventional battery module disposed in a shell.
Fig. 4 is a top section view of a battery system according to one embodiment of the disclosure.
Fig. 5 is a front section view of the battery system according to one embodiment of the disclosure.
Fig. 6 is a side section view of the battery system according to one embodiment of the disclosure.
Fig. 7 is a schematic of a fluid to flow in the battery system of the disclosure.
Fig. 8 is a structural perspective view of the pipe of the disclosure.
Fig. 9 is a front section view of the battery system according to another embodiment of the disclosure.
Fig. 10 is a front section view of the battery system according to another embodiment of the disclosure.

### DETAILED DESCRIPTION OF THE PREFERRED EMBODIMENTS

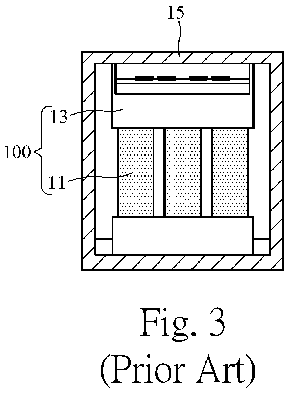

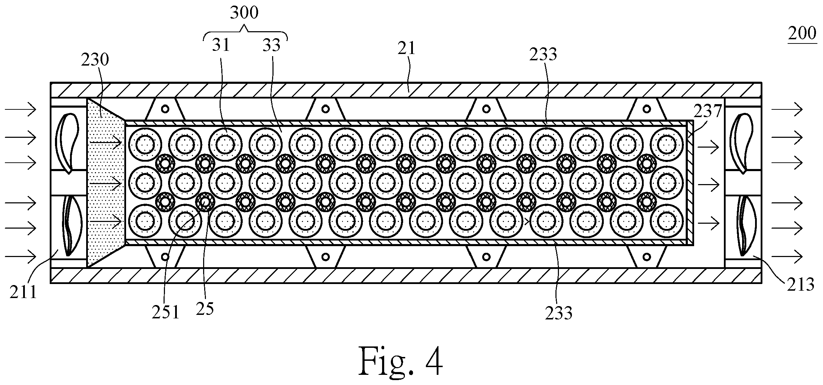

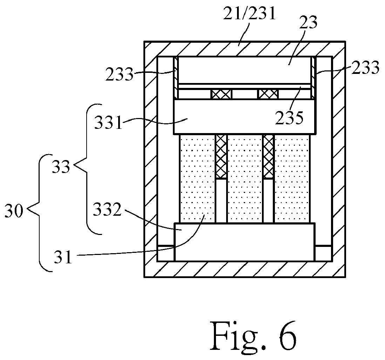

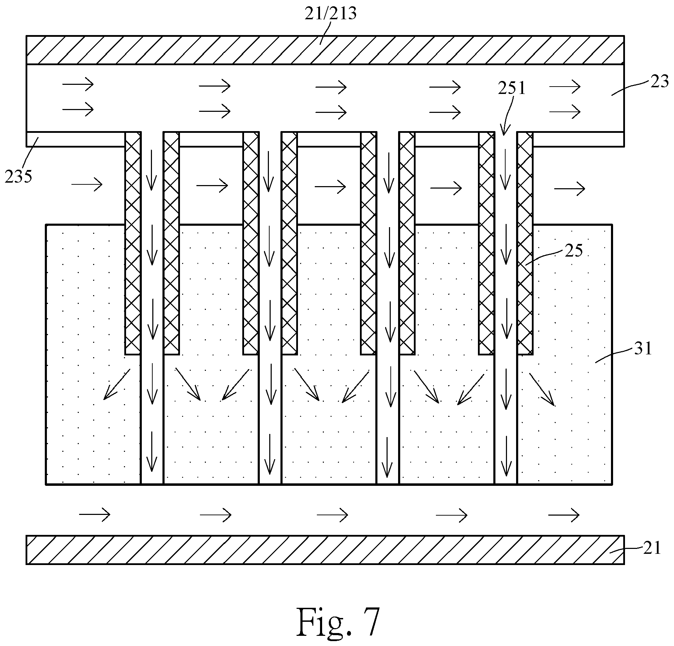

Referring to Fig. 4, Fig. 5, Fig. 6, and Fig. 7, there are shown a top section view, a front section view, and a side section view of a battery system according to one embodiment of the disclosure, and a schematic of a fluid to flow in the battery system of the disclosure. The battery system 200 of the disclosure is applied to a battery module 300, and performs a heat-dissipation for the battery module 300 in charging or discharging. As shown in Fig. 3, Fig. 4, and Fig. 5, the battery system 200 comprises a shell 21. The shell 21 is provided on one side thereof with a fluid injection device 211 including a fluid injection port, and provided on other side thereof with a fluid extraction device 213 including a fluid extraction port. The battery module 300 is disposed in the shell 21, and located between the fluid injection port of the fluid injection device 211 and the fluid extraction port of the fluid extraction device 213. In one embodiment of the disclosure, the fluid injection device 211 may be a blowing fan, and the fluid extraction device 213 may be an exhaust fan. In other embodiment of the disclosure, the fluid injection device 211 may be a fluid injection pump, and the fluid extraction device 213 may be a fluid extraction pump. A cold fluid is injected into the battery module 300 from the fluid injection port of the fluid injection device 211, and a hot fluid is extracted from the fluid extraction port of the fluid extraction device 213.

The battery module 300 comprises a plurality of battery cells 31, and a battery fixed holder 33 for accommodating and fixing the battery cells 31. The battery fixed holder 33 comprises a first fixed unit 331 and a second fixed unit 332. The first fixed unit 331 and the second fixed unit 332 comprises a plurality of fixed holes, respectively. Each of the battery cells 31 is provided with one end sleeved in the corresponding fixed hole of the first fixed unit 331, and provided with other end sleeved in the corresponding fixed hole of the second fixed unit 332. Thus, each of the battery cells 31 can be fixed between the first fixed unit 331 and the second fixed unit 33. Besides, a gap is between the battery cells 31.

The battery system 200 further comprises a fluid channel 23 and a plurality of tubes 25. The fluid channel 23 is a channel located around the battery fixed holder 33. For example, the fluid channel 23 is a channel isolated above the first fixed unit 331 of the battery fixed holder 33, a channel isolated below the second fixed unit 332 of the battery fixed holder 33, or a channel isolated at the left side or the right side of the battery fixed holder 33. In one embodiment of the disclosure, the fluid channel 23 is communicated with the fluid injection port of the fluid injection device 211 via a fluid guiding unit 230. The fluid channel 23 comprises a mouth-shaped channel composed of an upper plate 231, a pair of side plates 233, and a lower plate 235. The fluid channel 23 is provided with an opening end communicated with the fluid guiding unit 230, and provided with a closed end having a baffle plate 237. Wherein the upper plate 231 may be a top plate of the shell 21 or an independent plate configured above the side plate 233 and the baffle plate 237. The side plate 233 is a plate vertically extending from the top surface of the first fixed unit 331. The lower plate 235 may be a top surface structure of the first fixed unit 331 or a circuit board for controlling the charging or the discharge of the battery cells 31.

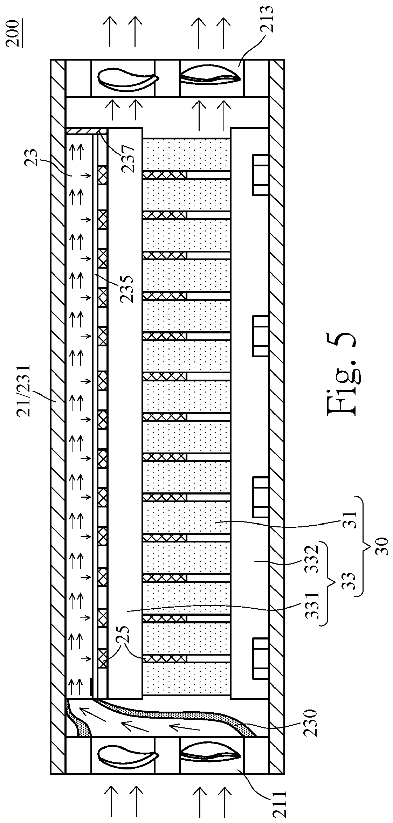

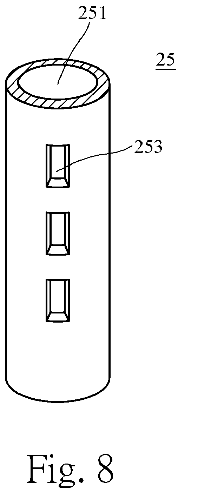

In one embodiment of the disclosure, the fluid guiding unit 230 is a communicating pipe connected between the fluid channel 23 and the fluid injection device 211. In the disclosure, the fluid guiding unit 230 is the only inlet for the cold fluid to be flowed into the fluid channel 23. In another embodiment of the disclosure, otherwise, the fluid guiding unit 230 is composed of a plurality of baffles. Each of the tubes 25 is vertically penetrated in the first fixed unit 331, and inserted into the gap between the battery cells 31. As shown in Fig. 4, a gap is existed between every four battery cells 31, and the lower end of the tube 25 can roughly correspond to the middle or rear section of the battery cells 31 when the tube 25 is inserted into the gap. Further, referring to Fig.5, Fig. 7, and Fig. 8, each of the battery cells 31 is provided with an upper end extended to the fluid channel 23 and including an upper opening 251, and provided with a lower end including at least one side opening 253 facing the corresponding battery cells 31. The fluid channel 23 is communicated with a space where the battery cells 31 are located via the tubes 25. Besides, each of the tubes 25 is passed through the lower plate 235, and the upper end of each of the tubes 25 is located in the fluid channel 23. The tubes 25 are the only outlets for the cold fluid flowed in the fluid channel 23.

When the battery system 200 is operating, the cold fluid, for example, cold air or cooling liquid, is injected into the fluid channel 23 via the fluid injection port of the fluid injection device 211, and the hot fluid is extracted from the fluid extraction port of the fluid extraction device 213. Specifically, when the battery cells 31 of the battery module 300 are charging or discharging, the battery cells 31 will heat up to form a hot zone where the battery cells 31 are located. To avoid the battery cells 31 in the hot zone to damage or explode because of overheating, the cold fluid is injected into the fluid guiding unit 230 via the fluid injection port of the fluid injection device 211, and flows into the fluid channel 23 via the guiding of the fluid guiding unit 230. The fluid channel 23 will become a cold zone via the flowing of the cold fluid. The cold fluid enters the inside of each of the tubes 25 via the upper opening 251 of each of the tubes 25 located in the fluid channel 23. After entering the tubes 25, the cold fluid is outputted from the side opening 253 at the lower end of each of the tubes 25 to the inside of the battery fixed holder 33, and blown towards the battery cells 31 in the gap between the battery cells 31 or circulated in the gap the battery cells 31, so that the heated battery cells 31 can be dissipated by the blowing or the circulation of the cold fluid. Next, the cold fluid becomes a hot fluid by absorbing the heat generated by the charging or discharging of the battery cells 31. Finally, the fluid extraction device 213 extracts the hot fluid from the fluid extraction port, and exhausts the hot fluid to the outside of the battery module 300. The cold fluid is continuously injected into the battery system 200, and the hot fluid is continuously extracted from the battery system 200, so that the battery module 300 can be effectively and uniformly cooled during charging or discharging.

In the disclosure, the number of the tubes 25, the length of each of the tubes 25, the diameter of the upper opening 251 of each of the tubes 25, and the number of the at least one side opening 253 of each of the tubes 25 will be adjusted according to a temperature of a space where each of the plurality of battery cells is charged or discharged.

Accordingly, by configuring the fluid channel 23 and the tubes 25 in the battery system 200, the fluid without heat-exchanging can be directly guided to the space where each of the battery cells 31, so that the heat generated by the charging or discharging of each of the battery cells 31 can be effectively and uniformly taken away by the fluid, and thereby the battery cells 31 will avoid overheating during the charging or discharging to decrease the risk of the damage or explosion of the battery cells 31, and increase the safety of the battery system 200 in use.

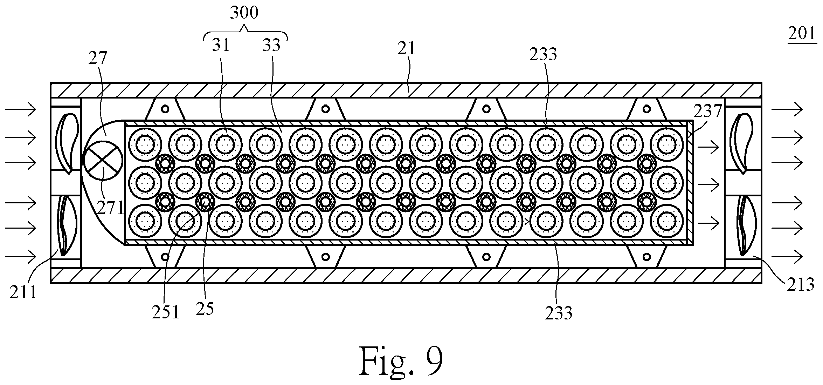

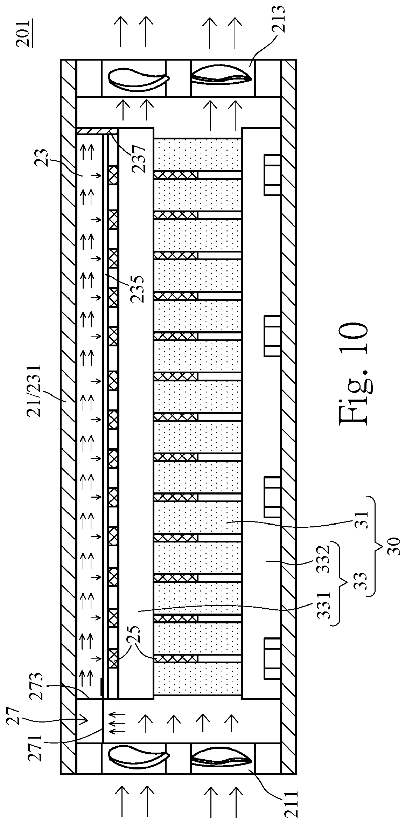

Referring to Fig. 9 and Fig. 10, there are shown a top section view and a front section view of the battery system according to another embodiment of the disclosure. The battery system 201 of the disclosure further comprises a blower 27. In the embodiment, the blower 27 is used for replacing the fluid guiding unit 230 of the above-described embodiment. The blower 27 comprises an inlet port 271 and an outlet port 273. The outlet port 273 is disposed perpendicular to where the inlet port 271 is located. The fluid channel 23 is provided with one side connected to the outlet port 273. In the present embodiment, the outlet port 273 of the blower 27 is the only inlet for the cold fluid to be flowed into the fluid channel 23.

When the battery cells 31 of the battery system 201 is charging or discharging, the cold fluid is injected into the battery system 201 via the fluid injection port of the fluid injection device 211. After the cold fluid is injected into the battery system 201, the blower 27 inhales the cold fluid injected from the fluid injection port of the fluid injection device 211 via the inlet port 271, and exhausts the cold fluid to the fluid channel 23 via the outlet port 272. Then, the cold fluid enters the inside of each of the tubes 25 via the upper opening 251 located in the fluid channel 23. After entering the tubes 25, the cold fluid is outputted from the side opening 253 at the lower end of each of the tubes 25 to the inside of the battery fixed holder 33, and blown towards the battery cells 31 at the gap between the battery cells 31 or circulated in the gap the battery cells 31, so that the heated battery cells 31 can be dissipated by the blowing or the circulation of the cold fluid. Next, the cold fluid becomes a hot fluid by absorbing the heat generated by the charging or discharging of the battery cells 31. Finally, the fluid extraction device 213 extracts the hot fluid from the fluid extraction port, and exhausts the hot fluid to the outside of the battery module 300. The cold fluid is continuously injected into the battery system 201, and the hot fluid is continuously extracted from the battery system 201, so that the battery cells 31 can be effectively and uniformly cooled during charging or discharging.

## Claims

1. A battery system (200, 201) having a heat-dissipation circulation structure, comprising:
a shell (21), provided on one side thereof with a fluid injection port, and provided on other side thereof with a fluid extraction port;
a battery module (300), disposed in the shell (21), and located between the fluid injection port and the fluid extraction port, wherein the battery module (300) comprises a plurality of battery cells (31) and a battery fixed holder (33) for accommodating and fixing the plurality of battery cells (31);
a fluid channel (23), located around the battery fixed holder (33), and communicated with the fluid injection port; and
a plurality of tubes (25) vertically penetrated in the battery fixed holder (33), respectively, wherein each of the plurality of tubes (25) is provided with an upper end extended to the fluid channel (23) and including an upper opening (251), and provided with a lower end including at least one side opening (253) facing the corresponding battery cells (31);
wherein the fluid channel (23) is communicated with a space where the plurality of battery cells (31) are located via the plurality of tubes (25);
wherein a cold fluid is injected into the fluid channel (23) via the fluid injection port, and flows into the space where the plurality of battery cells (31) are located via the plurality of tubes (25), and then a hot fluid is extracted from the fluid extraction port.

2. The battery system (200, 201) according to Claim 1, wherein the plurality of tubes (25) are the only outlets for the cold fluid flowed in the fluid channel (23).

3. The battery system (200) according to Claim 1, wherein the fluid channel (23) is communicated with the fluid injection port via a fluid guiding unit (230), which is a fluid guiding structure composed of a communicating pipe or a plurality of baffles, and is the only inlet for the cold fluid to be flowed into the fluid channel (23).

4. The battery system (200) according to Claim 3, wherein the fluid channel (23) is a mouth-shaped channel composed of an upper plate (231), a pair of side plates (233), and a lower plate (235); the fluid channel (23) is provided with an opening end communicated with the fluid guiding unit (230), and provided with a closed end including a baffle plate (237); each of the plurality of tubes (25) is passed through the lower plate (235), and provided with the upper end located in the fluid channel (23).

5. The battery system (200, 201) according to Claim 1, wherein the cold fluid is a cold air or a cooling liquid; when the cold fluid is injected into the fluid channel (23) via the fluid injection port, the fluid channel (23) will become a cold zone.

6. The battery system (200, 201) according to Claim 1, wherein when the plurality of battery cells (31) are charging or discharging, a hot zone is formed in the space where the plurality of battery cells (31) are located.

7. The battery system (201) according to Claim 1, wherein the battery system (201) further comprises a blower (27) having an inlet port (271) and an outlet port (273), and the fluid channel (23) is provided with one end communicated with the outlet port (273) of the blower (27); the blower (27) inhales the cold fluid injected from the fluid injection port via the inlet port, and exhausts the cold fluid to the fluid channel via the outlet port.

8. The battery system (200, 201) according to Claim 1, wherein the fluid injection port is configured on a fluid injection device (211), and the fluid extraction port is configured on a fluid extraction device (213).

9. The battery system (200, 201) according to Claim 8, wherein the fluid injection device (211) is a blowing fan or a fluid injection pump, and the fluid extraction device (213) is an exhaust fan or a fluid extraction pump.

10. The battery system (200, 201) according to Claim 1, wherein the number of the plurality of tubes (25), the length of each of the plurality of tubes (25), the diameter of the upper opening (251) of each of the plurality of tubes (25), and the number of the at least one side opening (253) of each of the plurality of tubes (25) will be adjusted according to a temperature of a space where each of the plurality of battery cells (31) is charged or discharged.
